# EUROPEAN PATENT APPLICATION

(11) **EP 2 166 760 A1**
(43) Date of publication of application: **24.03.2010**
(21) Application number: 08290876.5
(22) Date of filing: 17.09.2008
(51) Int. Cl.: H04N 7/14

(54) **A system and method for video communication**

(71) Applicant: Alcatel Lucent, 75008 Paris (FR)
(72) Inventor: Verde Carvallo, Orlando Jesus, 2018 Antwerpen (BE); Hemmeryckx-Deleersnijder, Bart, 3001 Heverlee (BE)
(74) Representative: BiiP cvba

(57) **Abstract**

The present invention relates to a system (100) for video communication between a first user (105₁) and a second user (105ₙ). The system (100) comprises means for receiving audio and/or video input from said first user (105₁). The system (100) further comprises a video composer module (102) for composing communication output for the first user (105₁) and an orchestrator module (101) for controlling the composing of the communication output for the first user (105₁).

## Description

### Field of the Invention

The present invention generally relates to video communication and more in particular to video communication between two or more users wherein the transmitted audio and video is enhanced for a better experience.

Although the present invention is related to video communication, it is not limited to communication wherein only video is used. In view of the present invention, video communication is any form of communication between two users wherein video is used. This includes examples such as pure video based communication, a combination of audio and video communication, a combination of video and text, etc. When one or more forms of communication are mentioned, it is to be understood that this is not limited to that particular example.

### Background of the Invention

Various forms of communication applications exist today which enable users to contact the rest of the world from their computer. Typical examples include voice over IP, instant messaging, e-mail and voice/video chat. In particular the latter example enables users to communicate with each other while being able to express all their emotions and thoughts, both visually and audibly.

Typical video chat applications enable the users to transmit a live or semi-live video image of themselves to the other users involved in the communication. This is a step forward from pure text-based communication between users which at best is enhanced by a static image or avatar for the user. More advanced video chat applications such as the Video Effects^{™} application of Logitech (http://www.logitech.com/index.cfm/488/466&cl=gb,en) allow their users to insert a few effects such as a screen overlay where a static or dynamic image covers or replaces a part of the video image or a modification of the colours or deformation of the video image via a number of filters or added effects.

Such video communication applications make the images that users can exchange more interesting than static pictures or plain video showing the person and the surroundings of that person. The applications receive an audio and/or video input and deliver these to the other users taking part in the communication. The output of the applications may be identical to the input, or may be a processed version thereof wherein certain effects or filters have been applied. Although this may provide a more fun experience for both users, these applications remain limited in the changes that can be made to the output video stream. Only a limited number of effects and filters is typically available and additional effects or filters have to be created by the software vendor or by amateur programmers. The vendors often charge money for such additional effects or features which may scare certain users away from using them. Amateur made effects and filters may cause problems with the original software and may be difficult to create or may not even be supported. In other words, the existing solutions are not easily extendable with new effects or filters.

Another drawback of these systems is that they rely on the computational power of the computer whereon they are executed. This means that older and less powerful systems may not be able to apply all effects or filters to the video images or that such systems may only be able to apply the effects and filters with a significant delay which is visible to the other users.

The British Broadcasting Corporation BBC has a research project titled Automated Coverage (http://www.bbc.co.uk/rd/projects/virtual/automated-coverage/index.shtml) which is related to more advanced and automatic capturing of video images at events such as a sports match. The technology of the BBC project enables automatic capturing of the action, framing the images on the action and providing a good view on the event without human interaction or with reduced human interaction. The system even allows for adjusting the lighting of a recording studio to the movement of the persons or objects that are in view of the cameras by controlling tracking lights to follow the person or object similar to tracking it with a camera.

The solution of the BBC is able to improve the capturing of events but only for events which are made up out of well defined states such as a tennis match where each action is known in advance. In addition, the BBC project is only able to capture the event as it proceeds but cannot alter the course of the event or the appearance of the project to the viewers. Furthermore the BBC project is based on expensive professional broadcasting equipment which is unavailable to regular people and can thus not be used for video communication applications by the general public.

It is an objective of the present invention to provide an easy customizable video communication platform. It is another objective of the present invention to provide a video communication platform which does not entirely rely on the equipment of the users. It is another objective of the present invention to provide a video communication system which may be operated with cheap equipment. It is yet another objective of the present invention to provide a video communication system that is able to alter the video communication.

### Summary of the Invention

The drawbacks of the prior art solutions are overcome and the objectives of the present invention are realized by a system for video communication between a first user and a second user, the system comprising means for receiving audio and/or video input from the first user and the system further comprises:
- a video composer module for composing communication output for the first user; and
- an orchestrator module for controlling the composing of the communication output for the first user.

Indeed, by having a module for composing the communication output for the first user and a module for controlling the composition of that communication output, it is possible to alter the communication output for each user. The audio and/or video input can be received from any source which also includes low-budget camera's and microphones. By configuring the orchestrator module, a user is able to alter the video communication output according to his own preferences and not to preferences of other users or the vendor as they are typically available in the effects or filters for applications such as the Video Effects^{™} of Logitech.

The first user is considered as the source of the communication, whereas the second user is considered as the user receiving the communication. However, because video communication is typically a two-way communication, both users can act as a first user and a second user during the communication. The users may act as first and second user simultaneously or taking turns. Simultaneously means that both users can simultaneously transmit video and receive video whereas a turn-based system means that at any given point in time, only one user can be transmitting and one user can be receiving that video. Users in the context of the present invention are people involved in the communication either directly or indirectly. A user may be actively speaking or performing actions, or may even be present without performing any actions. The users will typically be connected to each other via a plurality of intermediate devices which provide a communication link between all the users. In addition, a video communication may consist of more than just two users and the present invention can easily be applied to communications with more than two users.

The video composer module is able to process the input, which may be received by the video composer directly from the users or from another module in the system, and perform actions such as editing on the input before the output is generated or transmitted to the users. The orchestrator module controls how the video composer changes the input, which effects and filters have to be applied and when, how certain results are achieved, etc. The orchestrator can thus be considered as a central control module which operates other modules in the system and determines how certain output is achieved.

Part or all of the orchestrator module and video composer module may be located at the first user or the second user which means that the load of the processing can be spread over multiple systems. For instance, the equipment of the first user may be responsible for receiving audio and video input from the first user and contain an orchestrator module which controls the composition of the communication output for the first user. The composition itself may take place at the second user's equipment under control of the orchestrator module. This way, the first user's equipment only has to handle the emission of the communication whereas the second user's equipment assembles the communication into output which is presented to the second user. Alternatively, certain modules can be incorporated in the communication network between the two users in which case the load on user equipment can be reduced even more. For instance, the first user may be in charge of capturing the video information and transmitting it along with controlling the output while the network itself composes the communication output before it delivers the output to the second user.

The present invention provides a video communication system wherein audio and/or video input from a user is received and which is processed based on the desired output of that user. This way, a plain video can be altered to look like a particular type of movie or movie style or the video can contain additional effects which are not captured by the audio or video input devices.

Optionally in the system for video communication according to the present invention, the orchestrator module may further comprise means for analyzing the audio and/or video input.

By analyzing the video and/or audio input, the orchestrator module is able to determine what is going on at the location where one of the users is located. An analysis of the video input may result in awareness of movement, location of a person or object or even parts of that user or object. For instance, by analyzing the video input, the orchestrator may be able to determine that the camera is focussed on a person and it may be able to move the focus of the camera to a particular portion of that person such as the face, the eyes, the mouth, hands, etc. Similarly, objects may be recognized and the focus may be shifted to a particular object or part thereof.

The audio input can merely be used to determine when a particular user is active. However, an analysis of the audio input may also be used to obtain more specific information. For instance, noise may be filtered out once it is detected or may result in the addition of certain effects to the communication output for the user where the noise is present. In addition, certain sounds may have a certain visual reflection such as a loud bang may be accompanied by a flashing screen.

In general, the analysis of audio and video input can be used to either modify the input to obtain a specific result for the output, or can be used as indications that certain actions are to be performed or are performed. In other words, the analysis may be used to influence the output itself or may be used as input for the system to know the current state of the system, the user or the effects and filters that are to be applied.

Further optionally in the system for video communication according to the present invention, the orchestrator module may further comprise means for timing events.

The present invention influences the output that is used in video communication and thus influences the video that is transmitted to the receiving users. Certain influences, such as performing editing on the input, changing conditions at the capturing location, changing the capturing equipment, etc can be considered as events. In addition, events can also be actions taken by the users of the system such as movements, starting or stopping a communication, starting to talk, stopping with talking, etc. Because the orchestrator module controls the composition and possible the capturing of the input, it is able to time changes, influences and actions of users. Such timing of events allows the system to create stronger and more obvious effects and changes. For instance, changing light and camera movement simultaneously has a better influence on the video than performing both actions independently. The system is then also able to match certain user actions with appropriate changes in the communication output. For instance, the system is then able to mute background music as soon as a certain user starts to talk or the system may insert certain background music when a user starts to talk depending on the desired effects. It also enables the system to track the movement of a user with light and/or camera movements by synchronizing the movement of the user and the devices.

Optionally in the system for video communication according to the present invention, the orchestrator module may comprise means for applying styles to the communication output, the styles being an ontology defining the presentation of the communication output.

This optional feature of the present invention is best explained using an example. However, this does not mean that the present invention is limited to the described example or similar situations as the example. A use case for the present invention is to apply a certain movie style to the video communication between two users. Each user can select a type of movie which he likes and based on that selection, the system can alter the video communication output to match the characteristics of that style.

For instance, a user can select a film noir style for his communication which means that the system applies the characteristics of film noir to the video output of that user. Such characteristics can include the filtering of colour to achieve a black and white image, changing of the light conditions where possible in order to create a dark atmosphere with a lot of shadows while keeping the users in the dusk, etc. Similarly, a user may select a Dogma type of style which means that the camera cannot be steady, artificial light has to be turned off, etc.

All these specifications can be defined in an ontology which describes each movie style. Such a description can be limited to a few elements or can be extensive and specify each detail of a particular movie style. By providing the orchestrator module with means to process such styles, the orchestrator module is able to control the application of these styles to the input by the video composer module. These styles can be defined prior to their first application, for instance by the vendor of the system or the vendor of applications that operate according to the present invention. Once an ontology for a certain style is created, it can be applied by each orchestrator module.

The orchestrator may be able to process the style and apply it entirely, or may be limited to applying the parts of the style that are available for a certain capturing side. For instance, the camera in a dogma movie is typically hand-held. If the user captures video using a webcam, the image is stable. In such case, the shaking effect can only be achieved by applying a filter to the video input which shakes the image. However, when the video is captured using a camera that is moveable, the orchestrator may shake the camera itself in order to obtain a non-stable image as input.

Optionally in the system for video communication according to the present invention, the orchestrator module may further comprise means for transmitting instructions for composing the communication output to the video composer module.

Further optionally in the system for video communication according to the present invention, the video composer module may comprise means for receiving and processing the instructions.

The orchestrator module is in charge of controlling the operation of other modules in the system. To enable the orchestrator module to control the operation, it may be able to transmit instructions to the other modules. These instructions can be transmitted over a communication network between the orchestrator and other modules or can be sent as software calls within a single piece of software or between various pieces of software. For instance, both the orchestrator module and the video composer module can be two separate software applications which are executed on a computer. These two software application can communicate with each other in various ways such as over a network, a local loopback device or via system calls.

The exact implementation of the communication between various modules of the present invention is irrelevant for the understanding of the present invention. The present invention only requires some form of communication between the orchestrator module and the video composer module in order for the orchestrator module to control the operation of the video composer module and consequentially the output of the video composer module. However, the orchestrator module may also be able to communicate with other modules in the system or even other devices in the system such as audio or video capturing devices or other input and output devices or modules.

Each device or module that receives or expects one or more instructions from the orchestrator module or another module should be able to receive these instructions and process the instructions. These instructions may be explicit instructions on which actions to perform or may be more general instructions which define the effects to be achieved. In the first case, the receiving module may be able to execute the instructions or at least a part thereof. In the latter case, the receiving module may attempt to achieve the desired effect as good as possible based on the available tools such as filters, processing power, input devices, control interfaces to other devices and modules, etc.

Optionally in the system for video communication according to the present invention, the video composer module may comprise means for transmitting the communication output to the first user and/or the second user.

The video composer module is the module which takes the video input and composes the output based on the instructions from the orchestrator module. Therefore the video composer module is able to deliver the finished communication output of the first user to the second user and any other users or parties interested in the communication output. Of course, other modules may also be able to deliver the communication output to the receivers. For instance, the video composer may deliver the composed output to the orchestrator which delivers it to the receiving users or an additional node may be created which is only in charge of delivering communication output. The latter may for instance be beneficial in order to hide the exact topology of the communication system or to hide the location of certain modules in the system from the public. The first situation wherein the video composer delivers the video may however be faster because it does not rely on additional deliveries of the communication output to other modules or nodes in the network.

Optionally in the system for video communication according to the present invention, the video composer module may comprise editing means for applying one or more style effects and/or one or more user preferences on the communication output.

Further optionally in the system for video communication according to the present invention, the editing means may comprise one or more of the following:
- audio and/or video filters; and
- means for controlling the audio and/or video input.

The orchestrator module controls the communication output which is composed by the video composer module. In order to execute the instructions of the orchestrator module, the video composer module can edit the audio and video input. The input can be edited based on the instructions from the orchestrator, or the video composer module may be able to process style definitions and apply these styles.

One way of altering the output is by applying filters to the audio or video input that is received from the user. Certain filters can be used to change the colours, change the sharpness of the output, etc. which can be used to create certain effects. For instance, a shaking camera for a dogma could be achieved by applying certain filters to the input which make the image appear unsteady. A film noir or a black and white movie could be created by applying a filter which removes the colours from the video input and which makes the output appear black and white. Similarly certain effects can be applied to the audio input to meet the specific style of certain movie genres or user preferences. For instance, reverberation effects can be applied to audio, the tone of a voice could be altered, the audio input can be mixed with other audio such as a soundtrack or sound effects, etc.

Controlling video and audio input includes operations such as faster or slower playback of the input, reversing input, rotating images, reframing an image or changing the focus onto another part in the video, etc. For instance the video composer may alter the input in such a way that the mouth of the person speaking is shown in the complete video window rather than an entire face or an entire person.

Optionally the system for video communication according to the present invention may further comprise a performance director module, the performance director module being adapted for providing instructions and/or information to the first user and/or the second user.

Further optionally in the system for video communication according to the present invention, the performance director may comprise means for receiving and/or processing instructions from the orchestrator module.

The orchestrator is able to ensure that the video communication between two users is adapted according to one or more styles. This involves altering video output for each of the users, applying effects to the video output, etc. Certain changes may come as a surprise to the users involved, especially when an orchestrator is able to change the lights or control the camera or other equipment at a user. To avoid the surprises or to ensure that a user is aware of upcoming events, a performance director module may be used to alert the user.

A user can be alerted via textual, audible or visual indications of upcoming events such as a description of what is going to happen, a picture or icon depicting the changes or events, audible messages describing the events, etc. The performance director may alert the first user of changes at his side but may also alert the second user. In addition, if the orchestrator cannot control the equipment at the users location, it may instruct the user to perform certain actions such as altering the light conditions to meet a certain style.

Optionally the system for video communication as defined in claim according to the present invention may further comprise a media vault, the media vault being adapted for storing and providing audio and/or video information to the video composer module.

The media vault is a storage which holds various audio and video elements that can be added to audio and video input from the users. For instance a wide range of soundtracks of famous movies in particular genres can be stored in the media vault. The video composer can then use these soundtracks when a certain movie style is applied to a video communication. The style may also specify a certain genre of music and then music from that genre can be mixed with the audio input.

The media vault can be located at a central location in a communication network, at a service operator's data centre, at each user or the media vault may be a distributed storage system. The media vault can be restricted to the orchestrator and video composer when such modules are located at a service operator, or the media vault may be accessible to the general public when for instance the video composer is located at the user. A media vault may also be used as a central storage for style definitions where the various modules can retrieve the definitions or ontology of a style in order to apply these to a video communication.

Optionally the system for video communication according to the present invention may further comprise means for controlling peripherals.

Further optionally in the system for video communication according to the present invention, the means for controlling peripherals comprise one or more of the following:
- means for controlling a home automation system;
- means for controlling audio equipment;
- means for controlling video equipment; and
- means for controlling light equipment.

Peripherals such as lights, home automation systems, etc. can be used to change the surroundings of a user or to influence the captured audio and/or video input. For instance, by being able to interact with a home automation system, the orchestrator can change the light in the room according to the style that is to be applied to a video communication. Similarly, controlling the capturing equipment itself can be used to change the surroundings. A dogma film is typically without any artificial sound or music. By being able to control audio equipment of a user, the system is able to turn off any audio equipment such as a radio or music player. Similarly the lights may be turned off when artificial light is unwanted or the strength of the light may be adjusted to create a dark atmosphere for a film noir.

By allowing the orchestrator or other modules to control capturing equipment and equipment that can set or change the conditions around a user, a certain style can be applied without the need of extensive editing of the images. For instance, by changing the lights, there is no need for filters to alter the light conditions.

The present invention further relates to a method for video communication between a first user and a second user, the method comprising the step of receiving audio and/or video input from the first user,
**characterized in that** the method further comprises the steps of:
- composing communication output for the first user; and
- controlling the composing communication output for the first user.

### Brief Description of the Drawings

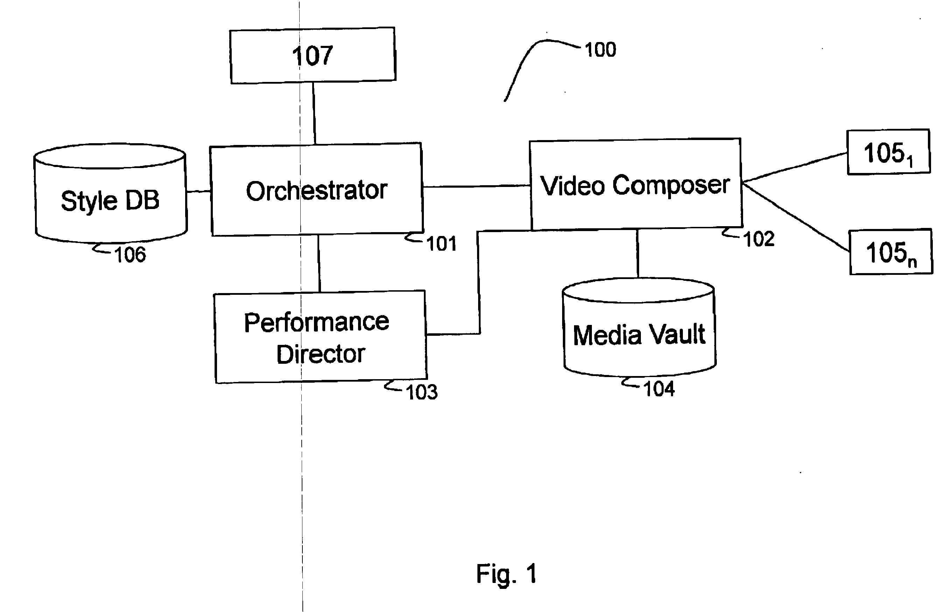

Fig. 1 illustrates an embodiment of the system according to the present invention.

### Detailed Description of Embodiment(s)

Fig. 1 illustrates an embodiment of the system according to the present invention. The system 100 contains an orchestrator 101, a video composer 102 and a performance director 103. The orchestrator 101 itself is further coupled to a styles database 106 and one or more external sources of styles, templates and information 107. The video composer 102 is coupled to the orchestrator 101, a media vault 104 and a number of users 105₁ to 105ₙ. The users 105₁ to 105ₙ are involved in a video communication with each other. If the communication is between two users, n = 2. However the communication may involve more than two users.

Fig. 1 does not show the communication between the various modules to avoid a too complex drawing. In this particular example wherein user 105₁ transmits a video message to user 105ₙ, the orchestrator 101 does not receive the input from the user 105₁. The user 105₁ delivers his audio and video input to the video composer 102 and informs the orchestrator 101 of his desired style and preferences. The orchestrator 101 provides instructions to video composer 102 in order to apply the style and preferences before the video composer 102 transmits the video output to the receiving user 105ₙ. In addition, the orchestrator 101 may be coupled to capturing equipment and other equipment such as lights, home automation systems, etc. at user's 105₁ location in order to control that equipment. Although not shown in Fig. 1, the orchestrator 101 can also be coupled to an addition module in charge of controlling the equipment at the location of the user 105₁.

The video composer 102 receives the audio and video input from the user 105₁ and composes the desired video communication output based thereon. The video composer 102 retrieves appropriate audio and video material from the media vault 104 and mixes that material with the video input received from user 105₁ based on instructions received from the orchestrator 101. Once the output has been composed, the video composer 102 delivers the communication output to the user 105ₙ. In the example shown in Fig. 1, the performance director 103 delivers his instructions and information for the users 105₁ to 105ₙ to the video composer 102 which in turn delivers these instructions and information. However in an alternative embodiment, the performance director 103 may be able to communicate with the users 105₁ to 105ₙ directly or via other modules in the system 100.

In another alternative embodiment, the orchestrator 101 may receive the input from the users 105₁ to 105ₙ connected to the system 100. This way the orchestrator 101 is aware of the video and audio input which enables the orchestrator 101 to perform analysis on the input from the users 105₁ to 105ₙ. The orchestrator 101 can then provide the input to the video composer 102 after the analysis along with any instructions needed to apply certain styles to the video input in order to compose the desired output. The system 100 may further also comprise another module for receiving input and performing analysis of the input. Such a module may then deliver the input to the appropriate modules for processing and composing the output and delivering the analysis to the modules able to use the analysis for applying certain styles or effects.

The performance director 103 receives instructions from the orchestrator 101 or information based on which the performance director 103 is aware of upcoming events and changes. The performance director 103 can merely relay these instructions to the users 105₁ to 105ₙ or can translate these instructions into more comprehensive information for a user. For instance, if the orchestrator 101 sends an instruction to both the video composer 102 and the performance director 103 indicating the name of an audio track that has to be mixed into the communication output, the performance director can merely send that instruction to the users 105₁ to 105ₙ or send an instruction stating that audio will be mixed into the output, which track, for how long, etc. The performance director 103 can transmit such information in a text representation, an audible representation, a video representation or an image such as an animation, a picture or an icon. The equipment of a user is then able to present the information and instructions from the performance director to the users 105₁ to 105ₙ.

The instructions and information of performance director 103 can be sent to all users, for instance when it is relevant to all users to know that a certain event is going to happen, or to one or more specific users which are involved in the event. For instance, an instruction to change light conditions will only be sent to a user whose light conditions have to be changed. Similarly, a notification of automatically changing light conditions will be sent to the user whose lights will change. The performance director 103 can determine which users have to receive the information and/or instructions or the orchestrator 101 may inform the performance director 103 of the users that are to receive information.

The media vault 104 hosts various pieces of media such as audio and video fragments from famous movies in particular genres, soundtracks, music from artists, video clips from artists, pictures, animations, etc. In addition to such media, the media vault 104 may hosts additional information such as meta-data related to the hosted media, style definitions, user preferences, etc. However, style definitions may also be stored in a separate style database 106 and the user preferences can be stored in such a database or yet another separate database or even on the equipment of the users.

The media vault 104 can be queried by the orchestrator 101 in order to retrieve pieces of media that can be used to apply a certain style effect to a video communication. In such case, the orchestrator 101 delivers the media that is retrieved from the media vault 104 to the video composer 102 in order for the composer 102 to use it in the video communication. However, the orchestrator 101 may also retrieve an identification of the desired media from the media vault 104 and deliver that identification to the composer 102 which in turn can use the reference or identification to retrieve the correct media from the media vault 104. Alternatively, the orchestrator 101 may have an overview of the available media and references or identifications thereof in which case it does not need a connection to the media vault 104.

The orchestrator 101 is further also connected to external sources 107 which can contain additional media, style definitions, user preferences, etc. In addition to the orchestrator 101, other modules of the system 100 such as video composer 102 and performance director 103 may also have access to the external sources 107. It is also possible that the media vault has access to external sources 107 and acts as a gateway between the system 100 and the external sources 107 in order to retrieve information from such sources.

Although this particular embodiment illustrates a centralized system wherein all the modules are located at the service operator's datacenter, it is also possible to distribute the components over multiple locations. For instance, each user may have his own video composer which composes the signal received from other users before they are presented to the receiving user. In such an embodiment, a single central orchestrator may control the composing at each users side, or each user may control the composing at the receiving user. Similarly the media vault may be a single database or storage or it can be a distributed storage, for instance for load balancing and redundancy. The styles database may also be integrated into the media vault, or may be integrated in the orchestrator or other modules of the system. Furthermore, the external sources could also include external sources of audio and video information. The video composer may also have access to the external sources or may retrieve information via the orchestrator module or other modules.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system (100) for video communication between a first user (105₁) and a second user (105ₙ), said system (100) comprising means for receiving audio and/or video input from said first user (105₁),
**characterized in that** said system (100) further comprises:
- a video composer module (102) for composing communication output for said first user (105₁); and
- an orchestrator module (101) for controlling said composing of said communication output for said first user (105₁).

2. The system (100) for video communication as defined in claim 1,
**characterized in that** said orchestrator module (101) further comprises means for analyzing said audio and/or video input.

3. The system (104) for video communication as defined in claim 1,
**characterized in that** said orchestrator module (101) further comprises means for timing events.

4. The system (100) for video communication as defined in claim 1,
**characterized in that** said orchestrator module (101) comprises means for applying styles to said communication output, said styles being an ontology defining the presentation of said communication output.

5. The system (100) for video communication as defined in claim 1,
**characterized in that** said orchestrator module (101) further comprises means for transmitting instructions for composing said communication output to said video composer module (102).

6. The system (100) for video communication as defined in claim 5,
**characterized in that** said video composer module (102) comprises means for receiving and processing said instructions.

7. The system (100) for video communication as defined in claim 1,
**characterized in that** said video composer module (102) comprises means for transmitting said communication output to said first user (105₁) and/or said second user (105ₙ).

8. The system (100) for video communication as defined in claim 1,
**characterized in that** said video composer module (102) comprises editing means for applying one or more style effects and/or one or more user preferences on said communication output.

9. The system (100) for video communication as defined in claim 8,
**characterized in that** said editing means comprise one or more of the following:
- audio and/or video filters; and
- means for controlling said audio and/or video input.

10. The system (100) for video communication as defined in claim 1,
**characterized in that** said system (100) further comprises a performance director module (103), said performance director (103) module being adapted for providing instructions and/or information to said first user (105₁) and/or said second user (105ₙ).

11. The system (100) for video communication as defined in claim 10,
**characterized in that** said performance director (103) comprises means for receiving and/or processing instructions from said orchestrator module (101).

12. The system (100) for video communication as defined in claim 1,
**characterized in that** said system (100) further comprises a media vault (104), said media vault (104) being adapted for storing and providing audio and/or video information to said video composer module (102).

13. The system (100) for video communication as defined in claim 1,
**characterized in that** said system (100) further comprises means for controlling peripherals.

14. The system (100) for video communication as defined in claim 13,
**characterized in that** said means for controlling peripherals comprise one or more of the following:
- means for controlling a home automation system;
- means for controlling audio equipment;
- means for controlling video equipment; and
- means for controlling light equipment.

15. A method for video communication between a first user (105₁) and a second user (105ₙ), said method comprising the step of receiving audio and/or video input from said first user (105₁),
**characterized in that** said method further comprises the steps of:
- composing communication output for said first user; and
- controlling said composing communication output for said first user.
